# EUROPÄISCHE PATENTSCHRIFT

(11) **EP 1 395 444 B1**
(45) Veröffentlichungstag und Bekanntmachung des Hinweises auf die Patenterteilung: **06.06.2007**
(21) Anmeldenummer: 01271288.1
(22) Anmeldetag: 14.12.2001
(51) Int. Cl.: B44C 1/22

(54) **OBERFLÄCHENSTRUKTURIERUNG FÜR GEGENSTÄNDE**
SURFACE STRUCTURING FOR OBJECTS
STRUCTURATION DE SURFACE POUR DES OBJETS

(30) Priorität: 21.12.2000 DE 10064093
(43) Veröffentlichungstag der Anmeldung: 10.03.2004
(73) Patentinhaber: Creativ Power Anstalt, 9487 Bendern (LI)
(72) Erfinder: Mayr, Alfred Friedrich, verstorben (AT)
(74) Vertreter: Schwarzensteiner, Marie-Luise
(86) Internationale Anmeldenummer: PCT/EP2001/014741
(87) Internationale Veröffentlichungsnummer: WO 2002/049859

(56) Entgegenhaltungen:
- EP-A- 0 807 538
- EP-A- 1 035 335
- DE-A- 3 811 613
- DE-A- 4 316 012
- DE-A- 19 803 787
- US-A- 5 011 567

## Beschreibung

Die Erfindung betrifft eine Oberflächenstrukturierung für Gegenstände, die Verwendung dieser Oberflächenstrukturierung sowie ihre Herstellung bzw. Erzeugung.

Viele Gegenstände des täglichen Gebrauchs weisen gänzlich glatte Oberflächen auf, so dass ihre Handhabung bzw. Benutzung oft schwierig, unter Umständen sogar gefährlich ist. Grund dafür ist eine mangelnde Griffigkeit, Haltekraft, Rutschfestigkeit oder Zugfestigkeit, welche durch eine glatte Oberfläche hervorgerufen wird. Als Beispiele können hier die Griffe von Handwerkszeugen, wie Hämmer, Schraubenzieher, Zangen, Lenkräder oder Schaltknüppel von Kraftfahrzeugen, Griffe an Sportgeräten, Haushaltsgerätschaften, Geschirrwaren, wie Gläser, genannt werden. Probleme mit der Griffigkeit, Rutschfestigkeit, Haltekraft, Zugfestigkeit treten in fast allen Lebensbereichen auf.

Es war naheliegend, diesen Problemen entgegenzuwirken, indem der Oberfläche ihre Glattheit genommen wird. Alle bisher getroffenen Maßnahmen sind ziemlich grob und liefern nur eine beschränkte Verbesserung in der Griffigkeit. Darüber hinaus verursachen sie beim Gebrauch häufig Schmerzen und führen unter Umständen sogar zu Verletzungen. Man denke dabei beispielsweise an die grob gerippten Handgriffe von Schraubenziehern oder Haushaltsgerätschaften. Mangelhaft ausgebildete Oberflächen von beispielsweise Lenkrädern oder sonstigen Griffen führen oft zum Abgleiten bzw. Abrutschen der Hände, insbesondere dann, wenn diese feucht sind.

Aus dem Dokument DE-A-4316012 ist eine strukturierte Werkstückoberfläche mit feinsten Rillen und Riefen bekannt.

Ausgehend von dieser Problematik war es Aufgabe der vorliegenden Erfindung, geeignete Maßnahmen zu entwickeln bzw. vorzusehen, mit welchen Griffigkeit, Rutschfestigkeit, Haltekraft von Oberflächen aller Art verbessert und optimiert werden können, bei gleichzeitiger bequemer Handhabung der so ausgestalteten Gegenstände und ohne deren übliches Erscheinungsbild und/oder deren Gebrauchsfähigkeit wesentlich oder negativ zu beeinflussen.

Gegenstand der Erfindung ist eine Oberflächenstrukturierung für Gegenstände gemäß Anspruch 1.

Durch die derartige Anordnung von parallel zueinander verlaufenden feinsten Rillen kann eine Griffigkeit, Rutschfestigkeit und Haltekraft von Gegenständen überraschenderweise um ein Vielfaches im Vergleich zu herkömmlich ausgerüsteten Gegenständen erhöht werden.

Feinste Rillen bedeuten im Rahmen der vorliegenden Erfindung solche, mit einer Breite von nur wenigen µm.

Unter herkömmlich ausgerüsteten Gegenständen müssen solche verstanden werden, welche über grobe Rippen oder sogenannte ergonomische Ausgestaltungen verfügen.

Anordnung, Beabstandung bzw. Breite, Führung und Tiefe der Rillen wird dabei im Wesentlichen durch die originäre Formgebung der Oberfläche und deren Verwendungszweck bestimmt sein. Nähere Ausführungen folgen unten anhand eines spezifischen Beispiels.

In diesem Zusammenhang verlaufen die feinsten Rillen der Oberflächenstrukturierung kreisförmig, elliptisch, bogenförmig oder halbkreisförmig, immer in Gruppen und parallel zueinander.

Erfindungsgemäß sind die oben genannten Gruppen von feinsten Rillen dicht gepackt auf bzw. in der Oberfläche angeordnet. Bereiche mit vollständig glatten Oberflächen sind dadurch ausgeschlossen, wodurch die Griffigkeit, Rutschfestigkeit und Haltekraft der jeweiligen Oberfläche wesentlich verbessert werden kann.

Dabei ist zu beachten, dass die gruppenweise kreisförmig, elliptisch, bogenförmig oder halbkreisförmig geführten Rillen entweder nur aus einer dieser geometrischen Formen gebildet ist oder zwei oder mehrere dieser geometrischen Formen im Verbund miteinander vorgesehen werden können, je nach der originären Gestalt der jeweils zu strukturierenden Oberfläche. Insbesondere mit der zuletzt genannten Ausführungsform lassen sich besonders dicht gepackte Strukturen auch auf stark gekrümmten Oberflächen erzielen.

Für verschiedene Anwendungszwecke ist es von Vorteil, und auch das ist Gegenstand einer bevorzugten Ausführungsform der vorliegenden Erfindung, wenn die feinsten Rillen eine verschiedene Tiefe aufweisen. Dabei ist zu beachten, dass erfindungsgemäß die Tiefe der Rillen eine Höhe nicht überschreiten darf, dass kantige Bereiche entstehen, welche wiederum, wie vorgenannt, gegebenenfalls zu Schmerzen oder Verletzungen bei der Handhabung führen könnten oder dadurch die ursprünglich vorgesehene Griffigkeit, Rutschfestigkeit, Haltekraft wieder herabgesetzt würde.

Für manche Anwendungsbereiche ist es auch von Vorteil, wenn die feinsten Rillen verschiedene Breiten bzw. Beabstandung aufweisen. Auch hier darf die Breite der Rillen nicht in einem Maße überschritten werden, dass kantige Bereiche auftreten.

Erfindungsgemäß weist die Oberflächenstrukturierung im Wesentlichen den Aufbau eines Fingerabdruckes auf, welcher, der Natur nachgebildet, eine besonders weiche, und dadurch insgesamt ergonomische Oberfläche liefert.

Die erfindungsgemäß vorgeschlagene Oberflächenstrukturierung ist vorteilhaft für Gebrauchsgegenstände aller Art, zur Erhöhung von deren Griffigkeit, deren Rutschfestigkeit, deren Haltekraft, Zugfestigkeit, Reinigungskraft und/oder Gefühlsechtheit. Sie eignet sich auch sehr gut zur ästhetischen Ausgestaltung von Oberflächen aller Art, wie Geschirrwaren, Stoffe, Werbeträger. Hier ist es zweckmäßig die Oberflächenstrukturierung mittels geeigneter (Farb)Druckverfahren auf die Oberflächen aufzubringen. Hier lassen sich gegebenenfalls ästhetische mit technischen Effekten sinnvoll kombinieren.

Damit ist die Anwendung äußerst vielfältig und beschränkt sich nicht nur auf Gegenstände des alltäglichen Lebens, welche von Hand betätigt bzw. geführt oder gehalten werden, sondern erstreckt sich beispielsweise auch auf alle Gegenstände, deren Rutschfestigkeit wesentlich erhöht werden muss, wie Autoreifen, Fahrradreifen Arbeitshandschuhe, Schuhbesohlungen oder Unterlagen für Teppiche und sonstige Bodenbeläge. Da die Wirkung der erfindungsgemäßen Oberflächenstrukturierung auch auf der Vergrößerung der Oberfläche beruht, ergeben sich mögliche Anwendungen in der Solartechnik, Gefriertechnik und der Beleuchtungstechnik.

Unter einem besonderen Aspekt der vorliegenden Erfindung wird die Oberflächenstrukturierung auch auf Außen- und/oder Innenseiten von Halteelementen, wie Dübeln, Nägeln, Schrauben angewendet.

Gegenstand der vorliegenden Erfindung ist des weiteren ein Verfahren zur Herstellung der Oberflächenstrukturierung, bei dem die gewünschte Strukturierung als Positiv oder Negativ auf die damit auszurüstende Oberfläche aufgebracht wird und die Rillen anhand des Positivs oder Negativs in oder auf der Oberfläche des Gegenstandes ausgebildet werden.

Dazu eignen sich alle im Stand der Technik bekannten Verfahren, insbesondere werden eine Feinziselierung durch besonders feine und speziell auszubildende Gerätschaften, eine Ausbildung durch die bekannte Lasertechnik oder durch die verschiedensten Arten der chemischen Photo-Ätzung in Betracht gezogen.

Das Verfahren zur Ausbildung der Oberflächenstrukturierung gemäß der vorliegenden Erfindung wird wieder im Wesentlichen durch Anordnung, Beabstandung, Führung und Tiefe der Rillen in Bezug auf die originäre Formgebung der Oberfläche und deren Verwendungszweck bestimmt sein. Die letztendliche Ausführungsform wird sich für den Fachmann beim Lesen der vorliegenden Beschreibung ohne eigenes erfinderisches Zutun ermitteln lassen. Besonders geeignet erscheinen aufgrund ihrer vielseitigen Anwendbarkeit, Methoden der Lasertechnik.

Die anliegenden Figuren zeigen in vergrößertem Maßstab eine mogliche Ausführungsform der vorliegenden Erfindung, worin:
- Fig. 1: einen Fingerabdruck und
- Fig. 2: die Strukturierung im Querschnitt eines Baumes ( Jahresringe) ist, nicht erfindungsgemäß.

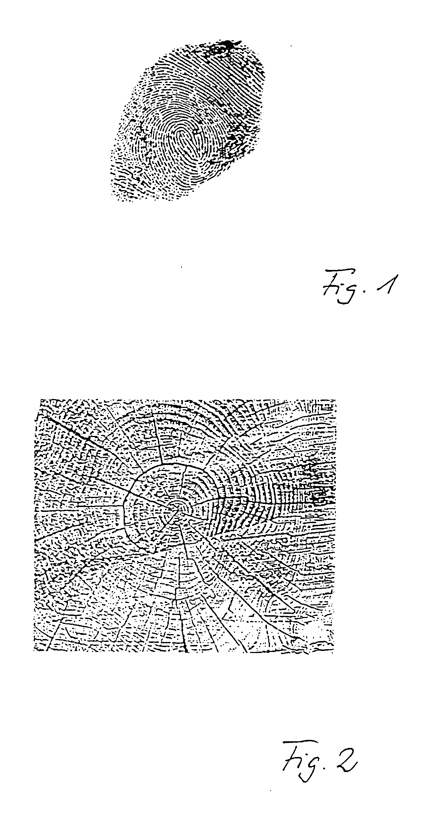

Besonders die Figur 1, welche einen Abdruck eines Daumens zeigt, lässt die verschiedenen Gruppen von Rillen in einer sehr dichten Packung erkennen. Die Vielfältigkeit der Rillenführung lässt ihre Anwendung selbst auf kompliziert gestalteten Oberflächen zu, wodurch deren Gesamtoberfläche in vorteilhafterweise erhöht wird.

Alle diese möglichen Ausgestaltungen des erfinderischen Gegenstandes bzw. die Ausgestaltung der Oberflächenstrukturierung, insbesondere deren Anwendbarkeit, werden im Folgenden an Hand verschiedener Anwendungsbeispiele näher erläutert.

Ein Mauerdübel muss in einem Bohrloch zu dessen Haltekraft bzw. Auszugskraft eine maximale, optimale Formschlüssigkeit mit dem angrenzenden Mauerwerk haben. Nur dadurch kann er die höchst mögliche Auszugskraft erreichen. Durch den Gegenstand der vorliegenden Erfindung wird, beispielsweise an einem Dübel, die größtmögliche (Greif-) Oberfläche erreicht.

Bei Kunststoffdübeln haben die meisten Hersteller bisher an den Dübeln möglichst tiefe, zahnartige oder ringförmige Hohlräume angebracht, ohne zu beachten, dass selbst durch die größtmögliche Schraubenabmessung das Kunststoffmaterial nicht vollkommen an die Bohrloch-Innenwandung angepresst wird, und somit im Bohrloch Hohlräume entstehen bzw. verbleiben, welche damit die Ausziehfestigkeit des Dübels dementsprechend stark herabsetzen.

Bei Stahldübeln ist ähnliches zu beobachten.

Ob Kunststoffdübel oder Stahldübel, in beiden Fällen wird durch eine erfindungsgemäße Oberflächen- bzw. Aussenflächenstrukturierung durch die Erhöhung der Gesamtoberfläche des Dübels eine maximale und optimale Formschlüssigkeit zwischen Dübel und Bohrloch-Innenwandung erreicht, welche solchen Dübeln eine weitaus größere Auszugsfestigkeit verleiht, als dies in der bisherigen Konstruktionsform möglich gewesen wäre.

Das gilt gleichermaßen für stationäre wie dynamische Belastungen.

Obwohl Dübel an sich eine Form aufweisen, deren Oberflächen schwer gänzlich durch eine Bearbeitung abzudecken sind, wird das durch die erfindungsgemäße Feinststrukturierung nach dem Prinzip eines Fingerabdrucks möglich. Die anzuwendenden Formen der Rillenführung ergeben sich aus den unterschiedlichen zu erwartenden Belastungen in Teilbereichen des Dübels.

Ein weiteres interessantes Anwendungsgebiet ist die Gestaltung der Laufflächen für Reifen von Rennwagen, zum Beispiel Formel 1-Fahrzeuge. Bis zum Verbot verwendete man bei Rennautos sogenannte Slicks, das sind absolut glatte spurlose Reifen, welche eine maximale Auflagefläche in Postkartengröße lieferten. Diese Reifen waren in Kurven sehr schwer lenkbar. Inzwischen verwendet man wenige, in der Reifenlauffläche angeordnete, rundlaufende Rillen. Durch die Rillen wird aber die Bodenhaftung herabgesetzt, was einen schwerwiegenden Nachteil darstellt.

Ähnliche Probleme treten bei Flugzeugreifen oder Rennradreifen auf.

Die erfindungsgemäße Oberflächenstrukturierung mit feinsten Rillen, wie sie in der vorliegenden Beschreibung und den anliegenden Patentansprüchen definiert ist, liefert hier nicht nur einen Kompromiss sondern auch die Lösung des existierenden Problems. Sie liefert hier eine verbesserte Technik mit erhöhter Sicherheit.

Ein weiteres Anwendungsgebiet ist die Solartechnik, wo man Solarzellen bzw. Solarpaneelen mit der erfindungsgemäßen Oberflächenstrukturierung versehen kann. Bekanntlich befinden sich die Elemente, in den an Wasser oder eine andere adäquate Flüssigkeit erwärmt wird, an Dächern und Wänden angeordnet. Glasscheiben und/oder Rohre dieser Elemente sind glatt und strukturlos ausgebildet. Wenn diese mit der erfindungsgemäßen Oberflächenstrukturierung ausgerüstet werden, ergibt sich durch die wesentliche Vergrößerung der Gesamtoberfläche eine erheblich bessere, schnellere und intensivere Erwärmung der Flüssigkeit bzw. des Wassers. Gleiches gilt für eine Übertragung auf die Kältetechnik.

Schließlich lassen sich mit der erfindungsgemäßen Oberflächenstrukturierung auch außergewöhnliche Lichteffekte erzielen, wenn man sie in der einen oder anderen Form auf die Oberfläche von Glühlampen aufbringt oder in Lichtfilter einarbeitet.

Nicht zuletzt kann die erfindungsgemäße Oberflächenstrukturierung zur Ausgestaltung von Hygieneartikeln aller Art, wie Kosmetiktücher, Kondome, Vibratoren verwendet werden. Bei Kosmetiktüchern lässt sich die Reinigungskraft um ein Vielfaches steigern ohne die Haut zu beanspruchen. Kondomen und Vibratoren kann eine erhöhte Gefühlsechtheit verliehen werden.

Wie bereits erwähnt, können die fingerabdruckförmigen Abbildungen auf jedweden Gegenständen vorgesehen werden, und in jeder dafür geeigneten Technik, ohne den Rahmen der vorliegenden Erfindung zu verlassen.

## Patentansprüche

1. Oberflächenstrukturierung für Gegenstände, bestehend aus feinsten, Rillen, wobei die Rillen im Wesentlichen parallel zueinander nach dem Muster eines Fingerabdrucks in kreisförmigen, elliptischen, bogenförmigen und/oder halbkreisförmigen dicht gepackten Gruppen angeordnet sind.

2. Oberflächenstrukturierung nach Anspruch 1, **dadurch gekennzeichnet, dass** die feinsten Rillen eine verschiedene Tiefe aufweisen.

3. Oberflächenstrukturierung nach Anspruch 2, **dadurch gekennzeichnet, dass** die feinsten Rillen verschiedene Breiten bzw. Abstände zueinander aufweisen.

4. Verwendung einer Oberflächenstrukturierung nach einem der Ansprüche 1 bis 3 auf Gebrauchsgegenständen aller Art zur Erhöhung der Griffigkeit, der Rutschfestigkeit, der Haltekraft, Zugfestigkeit, Reinigungskraft und/oder Gefühlsechtheit oder zur Verbesserung der ästhetischen Wirkung des jeweiligen Gegenstandes.

5. Verwendung einer Oberflächenstrukturierung nach einem der Ansprüche 1 bis 3 auf der Außen- und/oder Innenseite eines Halteelements, wie eines Dübels, einer Außenseite eines Nagels oder einer Schraube.

6. Verfahren zur Herstellung der Oberflächenstrukturirerung nach einem der Ansprüche 1 bis 3, bei dem die gewünschte Strukturierung als Positiv oder Negativ auf die damit auszurüstende Oberfläche aufgebracht wird und die Rillen in einer Anordnung gemäß Anspruch 1 an Hand des Positivs oder Negativs in oder auf der Oberfläche des Gegenstandes ausgebildet werden.

7. Verfahren nach Anspruch 6, **dadurch gekennzeichnet, dass** die Rillen mittels Feinziselierung ausgebildet werden.

8. Verfahren nach Anspruch 6, **dadurch gekennzeichnet, dass** die Rillen mittels Lasertechnik ausgebildet werden.

9. Verfahren nach Anspruch 6, **dadurch gekennzeichnet, dass** die Rillen mittels eines Photo-Ätzverfahrens oder eines Farbdruckverfahrens ausgebildet werden.

## Claims

1. Surface structuring for objects, consisting of superfine grooves, with the grooves essentially being arranged parallel to each other according to the pattern of a fingerprint, in circular, elliptical, arced and/or semi-circular, tightly packed groups.

2. Surface structuring according to Claim 1, **characterized in that** the superfine grooves have different depths.

3. Surface structuring according to Claim 2, **characterized in that** the superfine grooves have different widths or different spacing relative to each other.

4. Use of a surface structuring according to one of Claims 1 to 3 on commodities of all kinds to increase the grip, resistance to slip, retention force, tensile strength, cleaning force and/or authenticity of feel or to improve the aesthetic effect of the particular object.

5. Use of a surface structuring according to one of Claims 1 to 3 on the outer and/or inner side of a retaining element such as a dowel, on the outside of a nail or of a screw.

6. Method for the production of the surface structuring according to one of Claims 1 to 3, with the required structuring being produced as positive or negative on the surface to be provided with such structuring and the grooves, in an arrangement according to Claim 1, being formed by means of the positive or negative in or on the surface of the object.

7. Method according to Claim 6, **characterized in that** the grooves are formed by means of fine chasing.

8. Method according to Claim 6, **characterized in that** the grooves are formed using laser technology.

9. Method according to Claim 6, **characterized in that** the grooves are formed by a photographic etching method or a color printing method.

## Revendications

1. Structure de surface pour objets, constituée de rainures extrêmement fines, ces rainures étant disposées sensiblement parallèlement entre elles à la manière d'une empreinte digitale, en groupes denses circulaires, elliptiques, courbes et/ou semi-circulaires.

2. Structure de surface selon la revendication 1, **caractérisée en ce que** les rainures extrêmement fines sont de différentes profondeurs.

3. Structure de surface selon la revendication 2, **caractérisée en ce que** les rainures extrêmement fines sont de différentes largeurs ou sont espacées irrégulièrement.

4. Utilisation d'une structure de surface selon l'une quelconque des revendications 1 à 3 sur des objets d'usage courant de tout type pour améliorer la préhension, les propriétés antidérapantes, la force de retenue, la résistance à la traction, la force de nettoyage et/ou la sensation de toucher naturel ou le rendement esthétique de l'objet en question.

5. Utilisation d'une structure de surface selon l'une quelconque des revendications 1 à 3 sur la face externe et/ou interne d'un élément de retenue, par exemple d'une cheville, sur la face externe d'un clou ou d'une vis.

6. Procédé de réalisation de la structure de surface selon l'une quelconque des revendications 1 à 3, dans lequel la structure recherchée est appliquée sous forme positive ou négative sur la surface qu'il y a lieu d'en équiper et dans lequel les rainures agencées selon la revendication 1 sont formées dans ou sur la surface de l'objet moyennant le positif ou le négatif.

7. Procédé selon la revendication 6, **caractérisé en ce que** les rainures sont formées par ciselure.

8. Procédé selon la revendication 6, **caractérisé en ce que** les rainures sont formées moyennant une technique au laser.

9. Procédé selon la revendication 6, **caractérisé en ce que** les rainures sont formées moyennant un procédé de gravure chimique ou d'impression couleur.
